# EUROPÄISCHE PATENTSCHRIFT

(11) **EP 2 472 099 B1**
(45) Veröffentlichungstag und Bekanntmachung des Hinweises auf die Patenterteilung: **05.02.2020**
(21) Anmeldenummer: 11192290.2
(22) Anmeldetag: 07.12.2011
(51) Int. Cl.: F02N 15/00, F02N 15/02, H02K 7/108, H02K 13/00, F02N 11/00, H02K 7/118

(54) **Anker für einen Elektromotor zum Antrieb einer Startervorrichtung**
Armature for an electric motor for driving a starter device
Armature pour un moteur électrique pour l'entraînement d'un dispositif de démarrage

(30) Priorität: 28.12.2010 DE 102010064249
(43) Veröffentlichungstag der Anmeldung: 04.07.2012
(73) Patentinhaber: SEG Automotive Germany GmbH, 70499 Stuttgart (DE)
(72) Erfinder: Hallas, Patrick, 71640 Ludwigsburg (DE)
(74) Vertreter: Steinbauer, Florian

(56) Entgegenhaltungen:
- BE-A- 367 839
- FR-A1- 2 929 462
- JP-A- 3 229 966

## Beschreibung

### Stand der Technik

Brennkraftmaschinen können im Allgemeinen nicht aus eigener Kraft anlaufen, sondern benötigen eine separate Andrehvorrichtung, die die für den Startprozess notwendige mechanische Initialenergie bereitstellt.

Heutzutage kommen in aller Regel elektrische Andrehvorrichtungen mit einem Rotor und einem Stator, die aus einer geeigneten Stromquelle gespeist werden, zum Einsatz. Das Andrehritzel ist üblicherweise starr mit der Rotorwelle des Elektromotors verbunden, zum Beispiel auf diese aufgepresst oder einstückig zu dieser ausgebildet. Die Stromzufuhr in den Rotor erfolgt im Allgemeinen über Bürsten und einen Kommutator, wohingegen der Stator mit Wicklungen und/oder mit Permanentmagneten ausgeführt sein kann. Zur Erhöhung des Anlassdrehmoments kann ein Zwischengetriebe, insbesondere ein Planetengetriebe, vorgesehen sein. Das Ankerritzel treibt dann über das Zwischengetriebe das eigentliche Andrehritzel an. Zum Einspuren des Andrehritzels ist vielfach ein magnetisch betriebener Vorspuraktuator vorgesehen, der zum Einrücken des Andrehritzels in den Zahnkranz an der Schwungscheibe der Brennkraftmaschine dient. Zur Entkopplung der Andrehvörrichtung von der angesprungenen Brennkraftmaschine ist oftmals ein Freilauf vorgesehen.

Treten jedoch beim Anlassvorgang der Brennkraftmaschine Unregelmäßigkeiten auf, wie zum Beispiel Fehlzündungen, unerwartete Rückwärtsdrehungen oder eine so genannte Stoppschlag-Belastung beim Blockieren der Brennkraftmaschine, so wirken auf die Andrehvorrichtung extrem hohe mechanische Belastungen ein, die zur Beschädigung oder Zerstörung der Anlassvorrichtung führen können. Selbst beim normalen Startprozess einer Brennkraftmaschine treten durch die Auf- und Abbewegung der Kolben im Brennraum und der hiermit einhergehenden Kompression pulsierende Drehmomentstöße auf.

Aus dem Stand der Technik ist eine Vielzahl von elektrischen Startervorrichtungen zum Anlassen von Brennkraftmaschinen mit Drehmomentbegrenzern, die eine Beschädigung bei Unregelmäßigkeiten beim Startprozess verhindern sollen, bekannt.

So betrifft die US 5,241,871 einen drehmomentbegrenzten, elektrischen Anlasser für einen Verbrennungsmotor. Die Welle des Elektromotors ist mit einem Gewindeabschnitt versehen, der mit einer scheibenförmigen Antriebsplatte im Eingriff steht. Das Starterritzel ist auf der Welle frei verdrehbar und axial verschiebbar aufgenommen. Zwischen der Antriebsplatte und dem Starterritzel befindet sich ein topfförmiger Kupplungskörper aus einem Elastomer. Wird der Elektromotor zum Starten des Verbrennungsmotors in Rotation versetzt, so schraubt sich die Antriebsplatte aufgrund ihrer Massenträgheit in Richtung des Wellenendes vor und nimmt den Kupplungskörper sowie das Starterritzel mit, das hierdurch in einen Zahnkranz des Verbrennungsmotors eingespurt wird. Ein Anschlag am Wellenende begrenzt hierbei den Verschiebeweg. Zugleich wird der elastische Kupplungskörper zunehmend fester zwischen der sich auf der Welle vorschraubenden Antriebsplatte und dem Starterritzel eingespannt, so dass dieses in Rotation versetzt und der Startvorgang des Verbrennungsmotors eingeleitet wird. Die Antriebsplatte bildet zusammen mit dem Kupplungskörper und dem Starterritzel eine Reibungskupplung, die das auf die Antriebswelle einwirkende Drehmoment limitiert. Das maximal übertragbare Drehmoment ist durch den Kompressionsgrad des Kupplungskörpers einstellbar. Das frei drehbare Andrehritzel dient unmittelbar zum Einspuren in den Zahnkranz der Brennkraftmaschine und verschiebt sich demzufolge in axialer Richtung auf der Welle.

Die DE 101 48 670 A1 betrifft eine weitere Startervorrichtung zum Andrehen von Brennkraftmaschinen mit einem Startermotor, der einen Stator und einen Rotor mit einem Planetengetriebe umfasst. Zwischen dem Rotor und dem Planetengetriebe ist mindestens ein federndes Element zur elastischen Abmilderung von Drehstößen zwischen der Rotorwelle mit ihrem Rotorblechpaket und der Ritzelwelle platziert. Es besteht stets eine, abgesehen von ihrer Eigenelastizität, mechanisch "feste" bzw. kraftschlüssige und formschlüssige Verbindung zwischen der Rotorwelle mit dem Rotorblechpaket und dem am federnden Element befestigten Antriebsritzel, das mit dem nachgeschalteten Planetengetriebe im Eingriff steht. Das federnde Element kann mit einem Torsionsstab, einem ringförmigen Element, einer mäandrierenden Blattfeder oder einer Schlingfeder realisiert sein. Eine definierte Drehmomentbegrenzung ist - abgesehen von der Ausführungsform mit dem Torsionsstab - nur durch ein "Überspringen", das heißt durch zeitweises Aussetzen des Formschlusses zwischen der Rotorwelle und dem federnden Element möglich. Ein "weiches" Einsetzen der Drehmomentbegrenzung, etwa durch die Verwendung einer Reibungskupplung oder einer Rutschkupplung, erfolgt nicht.

Aus der FR 2 803 125 A1 ist ferner ein robuster Gleichstromgenerator mit einem Rotor und einem Stator zur Verwendung in Luftfahrzeugen, insbesondere Helikoptern, bekannt. Die Stromabnahme erfolgt über einen mit dem Rotor verbundenen Kollektor. Der Stator ist in Monoblock-Bauweise ausgeführt, um die Vibrationsfestigkeit des Generators zu erhöhen. Ein Antriebsritzel des Generators ist über eine flexible Kupplung mit der Rotorwelle verbunden, um die Einkopplung von Vibrationen zu verringern. Eine definierte Drehmomentbegrenzung mithilfe der flexiblen Kupplung ist nicht vorgesehen

Die DE 2 205 235 A betrifft eine Lamellenkupplung für eine elektrische Andrehvorrichtung für eine Brennkraftmaschine, mit einem die äußeren Lamellen antreibenden Mitnehmer und einer die inneren Lamellen aufnehmenden Kupplungsmutter, welche auf einem Steilgewindeabschnitt der Antriebswelle sitzt, zwischen zwei Anschlägen längsbewegbar ist, und sich an dem antriebsseitigen Anschlag federnd abstützt sowie einen Druckring und mindestens eine Einstellscheibe trägt. Das von der Lamellenkupplung übertragene Drehmoment nimmt nach dem Anlaufen der Ankerwelle des Elektromotors kontinuierlich zu, bis ein maximal übertragbares, durch die mindestens eine Einstellscheibe begrenztes, Drehmoment erreicht ist. Diese vorbekannte Ausführungsform ist wegen der Lamellenkupplung konstruktiv aufwändig und das jeweils übertragbare Drehmoment variiert.

Die DE 23 37 260 A1 zeigt einen Schraubtrieb für eine Andrehvorrichtung für eine Brennkraftmaschine mit einer auf einer Antriebswelle angeordneten Schraubhülse und einem mit der Schraubhülse im Eingriff stehenden Mitnehmer, der mit einem auf der Antriebswelle dreh- und verschiebbar gelagerten Andrehritzel verbunden ist. Das voll eingespurte Andrehritzel schlägt an einen endseitigen Lagerfortsatz der Vorrichtung an und ist dann über den Mitnehmer und die Schraubhülse mit der Antriebswelle des Elektromotors kraftschlüssig gekuppelt.

Die JP 3-229966 zeigt eine Startervorrichtung, deren Andrehritzel gegen eine Rutschkupplung mittels einer Schraubverbindung mit der Ankerwelle verbunden ist.

### Offenbarung der Erfindung

Es wird ein Anker für einen Elektromotor zum Antrieb einer Startervorrichtung für eine Brennkraftmaschine mit einem auf einer Ankerwelle drehbar aufgenommenen Ankerritzel zum Antrieb eines nachgeschalteten Zwischengetriebes und einem auf der Ankerwelle angeordneten Ankerpaket mit einer Ankerwicklung offenbart.

Erfindungsgemäß ist das Ankerritzel in axialer Richtung auf der Ankerwelle lagefixiert und zwischen dem Ankerritzel und der Ankerwelle ist eine Rutschkupplung platziert sowie ein konstruktiv einfacher Aufbau des erfindungsgemäßen Ankers gegeben indem dabei vorgesehen ist, dass das Ankerritzel mittels mindestens eines Schnapprings auf der Ankerwelle befestigt ist.
Infolge des Schnapprings kann das Ankerritzel im Bedarfsfall auf einfache Art und Weise gegen ein Ankerritzel mit einer abweichenden Anzahl von Zähnen oder im Verschleißfall ausgetauscht werden. Darüber hinaus vereinfacht der Schnappring die Montage des Ankers.

Kommt es beim Anlassvorgang der Brennkraftmaschine zu Unregelmäßigkeiten, ist durch die Rutschkupplung sichergestellt, dass kein unzulässig hohes Drehmoment auf den Anker der elektrischen Startervorrichtung zurückwirken kann. Darüber hinaus kann das Ankerritzel im Bedarfsfall auf der Ankerwelle leicht gegen ein anderes Ankerritzel mit einer abweichenden Anzahl von Zähnen ausgewechselt werden. Hierdurch kann das Übersetzungsverhältnis der Startervorrichtung im Zusammenspiel mit dem Planetengetriebe geändert werden, ohne den kompletten Anker auszuwechseln. Ferner ist ein schneller Austausch des Ankerritzels im Verschleißfall möglich.

Das Ankerritzel bzw. das Abtriebszahnrad des erfindungsgemäßen Ankers ist nicht dazu bestimmt, unmittelbar in einen Zahnkranz einer zu startenden Brennkraftmaschine einzugreifen. Vielmehr steht das Ankerritzel im Eingriff mit einem Zwischengetriebe, insbesondere einem Planetengetriebe, das ein Vorspurgetriebe antreibt. Erst durch das Vorspurgetriebe wird das eigentliche Andrehritzel in Drehung versetzt und in den Schwungradzahnkranz der Brennkraftmaschine eingespurt. Das dem Planetengetriebe nachgeschaltete Vorspurgetriebe umfasst zu diesem Zweck beispielsweise einen magnetischen Vorspuraktuator zum Einrücken sowie einen Freilauf, der zur mechanischen Entkopplung der angesprungenen Brennkraftmaschine von der Startervorrichtung dient

Die Rutschkupplung umfasst einen Ankerritzelflansch, mindestens einen Reibbelag, eine Scheibe und mindestens eine Druckfeder.

Nach Maßgabe einer weiteren vorteilhaften Ausgestaltung ist vorgesehen, dass der Reibbelag zumindest bereichsweise auf einer Innenfläche des Ankerritzelflansches und/oder zumindest bereichsweise auf einer Scheibenaußenfläche ausgebildet ist. Durch die zumindest bereichsweise Ausbildung des Reibbelages kann das von der Rutschkupplung maximal übertragbare Drehmoment gezielt verändert werden. Darüber hinaus kann das gewünschte, maximal von der Rutschkupplung übertragbare Drehmoment durch eine geeignete Materialzusammensetzung des Reibbelages definiert eingestellt werden.

Die Scheibe ist auf einer Lamellenverzahnung der Ankerwelle verdrehfest aufgenommen.

Hierdurch wird die Drehmomentübertragung zwischen dem Anker und dem Ankerritzel ermöglicht. Die Scheibe befindet sich mit der Lamellenverzahnung des Ankers in einem zumindest bereichsweisen Formschluss, wohingegen die Drehmomentübertragung zwischen der Scheibe und dem Ankerritzelflansch durch einen Reibschluss erfolgt. Die Lamellenverzahnung dient zugleich zur Lagefixierung der Ankerbleche des Ankerpaketes auf der Ankerwelle.

Nach einer weiteren vorteilhaften Ausgestaltung ist vorgesehen, dass zwischen der Scheibe und dem Ankerpaket eine Druckfeder angeordnet ist

Durch die Druckfeder ist sichergestellt, dass ein definiertes Anfangsdrehmoment mittels der Rutschkupplung übertragbar ist. Darüber hinaus ermöglicht der Einsatz von Druckfedern unterschiedlicher Härte bzw. Federkraft eine Variation des von der Rutschkupplung, maximal übertragbaren Drehmoments Mₘₐₓ. Hierbei stützt sich die Druckfeder auf einer Scheibeninnenfläche und dem Ankerpaket ab. Die eingesetzte Druckfeder sollte eine möglichst geringe axiale Baulänge, wie zum Beispiel eine Tellerfeder oder eine Wellfeder, aufweisen. Alternativ kann die Druckfeder auch eine Spiralfeder sein.

In die Ankerwelle ist mindestens eine Ankerwellennut und in eine Ankerritzelbohrung ist mindestens eine Ankerritzelnut zur Aufnahme des mindestens einen Schnapprings eingebracht.

Die Nuten mit einer bevorzugt rechteckförmigen Querschnittsgeometrie sind fertigungstechnisch leicht und kostengünstig herzustellen und gewährleisten die gewünschte Lagefixierung des Ankerritzels in Relation zur Ankerwelle, derart, dass eine freie Drehung um die Ankerwelle möglich ist, jedoch das axiale Verschieben des Ankerritzels auf der Ankerwelle verhindert wird.

### Kurze Beschreibung der Zeichnungen

Anhand der Zeichnung soll die Erfindung nachstehend eingehender beschrieben werden.

Es zeigen:
- Figur 1: Einen Längsschnitt durch eine aus dem Stand der Technik bekannte elektrische Startervorrichtung für eine Brennkraftmaschine;
- Figur 2: eine perspektivische Ansicht des erfindungsgemäßen Ankers für einen Elektromotor einer elektrischen Startervorrichtung für eine Brennkraftmaschine;
- Figur 3: einen Längsschnitt durch den Anker gemäß Figur 2; und
- Figur 4: eine detaillierte Ansicht der Scheibe mit dem Reibbelag.

### Ausführungsformen

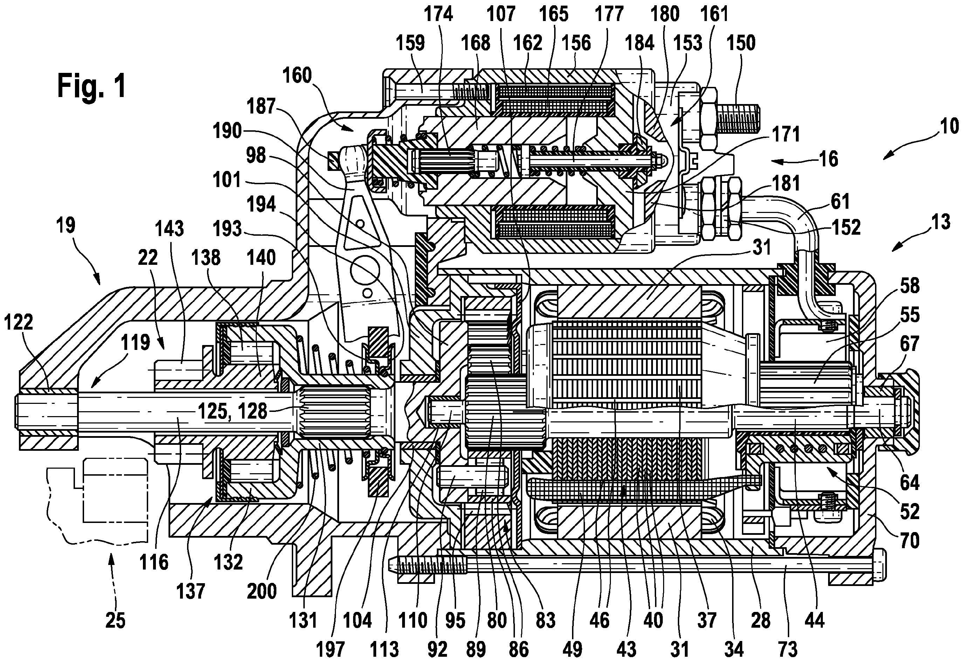

Die Figur 1 zeigt zunächst eine aus dem Stand der Technik bekannte Startervorrichtung 10 in einem Längsschnitt.

Diese Startervorrichtung 10 weist beispielsweise einen Startermotor 13 und einen Vorspuraktuator 16 (z. B. Relais, Starterrelais) auf. Der Startermotor 13 und der elektrische Vorspuraktuator 16 sind an einem gemeinsamen Antriebslagerschild 19 befestigt. Der Startermotor 13 dient funktionell dazu, ein Andrehritzel 22 anzutreiben, wenn es im Zahnkranz 25 der hier nicht dargestellten Brennkraftmaschine eingespurt ist.

Der Startermotor 13 weist als Gehäuse ein Polrohr 28 auf, das an seinem Innenumfang Polschuhe 31 trägt, die jeweils von einer Erregerwicklung 34 umwickelt sind. Die Polschuhe 31 umgeben wiederum einen Anker 37, der ein aus Lamellen 40 aufgebautes Ankerpaket 43 und eine in Nuten 46 angeordnete Ankerwicklung 49 aufweist. Das Ankerpaket 43 ist auf eine Antriebswelle 44 aufgepresst. An dem, dem Andrehritzel 22 abgewandten Ende der Antriebswelle 44 ist des Weiteren ein Kommutator 52 angebracht, der unter anderem aus einzelnen Kommutatorlamellen 55 aufgebaut ist. Die Kommutatorlamellen 55 sind in bekannter Weise mit der Ankerwicklung 49 derartig elektrisch verbunden, dass sich bei Bestromung der Kommutatorlamellen 55 durch Kohlebürsten 58 eine Drehbewegung des Ankers 37 im Polrohr 28 ergibt. Eine zwischen dem elektrischen Vorspuraktuator 16 und dem Startermotor 13 angeordnete Stromzuführung 61 versorgt im Einschaltzustand sowohl die Kohlebürsten 58 als auch die Erregerwicklung 34 mit Strom. Die Antriebswelle 44 ist kommutatorseitig mit einem Wellenzapfen 64 in einem Gleitlager 67 abgestützt, welches wiederum in einem Kommutatorlagerdeckel 70 ortsfest gehalten ist. Der Kommutatorlagerdeckel 70 wiederum wird mittels Zugankern 73, die über den Umfang des Polrohrs 28 verteilt angeordnet sind (Schrauben, beispielweise zwei, drei oder vier Stück) im Antriebslagerschild 19 befestigt. Es stützt sich dabei das Polrohr 28 am Antriebslagerschild 19 ab und der Kommutatorlagerdeckel 70 am Polrohr 28.

In Antriebsrichtung schließt sich an den Anker 37 ein sogenanntes Sonnenrad 80 an, das Teil eines Planetengetriebes 83 ist. Das Sonnenrad 80 ist von mehreren Planetenrädern 86 umgeben, üblicherweise drei Planetenräder 86, die mittels Wälzlagern 89 auf Achszapfen 92 abgestützt sind. Die Planetenräder 86 wälzen in einem Hohlrad 95 ab, das im Polrohr 28 außenseitig gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101 und einem darin angeordneten Gleitlager 104 gelagert. Das Zwischenlager 101 ist derartig topfförmig gestaltet, dass in diesem sowohl der Planetenträger 98, als auch die Planetenräder 86 aufgenommen sind. Des Weiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polrohrs 28 ab. Der Anker 37 weist auf dem vom Kommutator 52 abgewandten Ende der Antriebswelle 44 einen weiteren Wellenzapfen 110 auf, der ebenfalls in einem Gleitlager 113 aufgenommen ist. Das Gleitlager 113 wiederum ist in einer zentralen Bohrung des Planetenträgers 98 aufgenommen. Der Planetenträger 98 ist einstückig mit der Abtriebswelle 116 verbunden. Diese Abtriebswelle 116 ist mit ihrem vom Zwischenlager 101 abgewandten Ende 119 in einem weiteren Lager 122, welches im Antriebslagerschild 19 befestigt ist, abgestützt.

Die Abtriebswelle 116 ist in verschiedene Abschnitte aufgeteilt: So folgt dem Abschnitt, der im Gleitlager 104 des Zwischenlagers 101 angeordnet ist, ein Abschnitt mit einer sogenannten Geradverzahnung 125 (Innenverzahnung), die Teil einer sogenannten Welle-Nabe-Verbindung 128 ist. Diese Welle-Nabe-Verbindung 128 ermöglicht in diesem Fall das axial geradlinige Gleiten eines Mitnehmers 131. Dieser Mitnehmer 131 ist ein hülsenartiger Fortsatz, der einstückig mit einem topfförmigen Außenring 132 des Freilaufs 137 verbunden ist. Dieser Freilauf 137 (Richtgesperre) besteht des Weiteren aus dem Innenring 140, der radial innerhalb des Außenrings 132 angeordnet ist. Zwischen dem Innenring 140 und dem Außenring 132 sind Klemmkörper 138 angeordnet. Diese Klemmkörper 138 verhindern im Zusammenwirken mit dem Innen- und dem Außenring 140,132 eine Relativdrehung zwischen dem Außenring 132 und dem Innenring 140 in einer zweiten Richtung. Mit anderen Worten: Der Freilauf 137 ermöglicht eine umlaufende Relativbewegung zwischen Innenring 140 und Außenring 132 nur in eine Richtung. In diesem Ausführungsbeispiel ist der Innenring 140 einstückig mit dem Andrehritzel 22 und dessen Schrägverzahnung 143 (Außenschrägverzahnung) ausgeführt. Das Andrehritzel 22 kann alternativ auch als geradverzahntes Ritzel ausgeführt sein. Statt elektromagnetisch erregter Polschuhe 31 mit Erregerwicklung 34 können auch permanentmagnetisch erregte Pole verwendet werden.

Der elektrische Vorspuraktuator 16 bzw. der Anker 168 hat aber darüber hinaus auch die Aufgabe, mit einer Schubstange 174 über ein Zugelement 187 einen am Antriebslagerschild 19 drehbeweglich angeordneten Hebel 190 zu bewegen. Dieser Hebel 190, üblicherweise als Gabelhebel ausgeführt, umgreift mit zwei hier nicht dargestellten "Zinken" an ihrem Außenumfang zwei Scheiben 193 und 194, um einen zwischen diesen eingeklemmten Mitnehmerring 197 zum Freilauf 137 hin gegen den Widerstand der Einspurfeder 200 zu bewegen und dadurch das Andrehritzel 22 in dem Zahnkranz 25 einzuspuren. Der Anker 168 verfügt ferner über einen Ankerrückschluss 171 zur Führung des elektromagnetischen Feldes. Der Anker 168 betätigt zugleich einen Schaltbolzen 177 (Schaltachse) durch den die Kontakte 180,181 mittels der Kontaktbrücke 184 elektrisch verbindbar sind.

Nachfolgend wird auf den Einspurmechanismus eingegangen. Der elektrische Vorspuraktuator 16 weist einen Bolzen 150 auf, der ein elektrischer Kontakt ist und im Fall der Integration in ein Kraftfahrzeug an den Pluspol einer elektrischen Starterbatterie, die hier nicht dargestellt ist, angeschlossen ist. Dieser Bolzen 150 ist durch einen Deckel 153 hindurchgeführt. Ein zweiter Bolzen 152 ist ein Anschluss für den elektrischen Startermotor 13, der über die Stromzuführung 161 (dicke Litze) versorgt wird. Dieser Deckel 153 schließt ein Gehäuse 156 aus Stahl ab, welches mittels mehrerer Befestigungselemente 159 (Schrauben) am Antriebslagerschild 19 befestigt ist.

In dem elektrischen Vorspuraktuator 16 ist eine Schubeinrichtung 160 zur Ausübung einer Zugkraft auf den Gabelhebel 190 und eine Schalteinrichtung 161 angeordnet. Die Schubeinrichtung 160 hat eine Einzugswicklung 162 und die Schalteinrichtung 161 verfügt über eine Haltewicklung 165. Die Einzugswicklung 162 der Schubeinrichtung 160 und die Haltewicklung 165 der Schalteinrichtung 161 bewirken jeweils im eingeschalteten Zustand ein elektromagnetisches Feld, das verschiedene Bauteile durchsetzt. Die Welle-Nabe-Verbindung 128 kann statt mit einer Geradverzahnung 125 auch mit einer Steilgewindeverzahnung ausgestattet sein. Es sind dabei die Kombinationen möglich, wonach a) das Andrehritzel 22 schrägverzahnt ist und die Welle-Nabe-Verbindung 128 eine Geradverzahnung 125 aufweist, b) das Andrehritzel 22 schrägverzahnt ist und die Welle-Nabe-Verbindung 128 eine Steilgewindeverzahnung aufweist oder c) das Andrehritzel 22 geradverzahnt ist und die Welle-Nabe-Verbindung 128 eine Steilgewindeverzahnung aufweist.

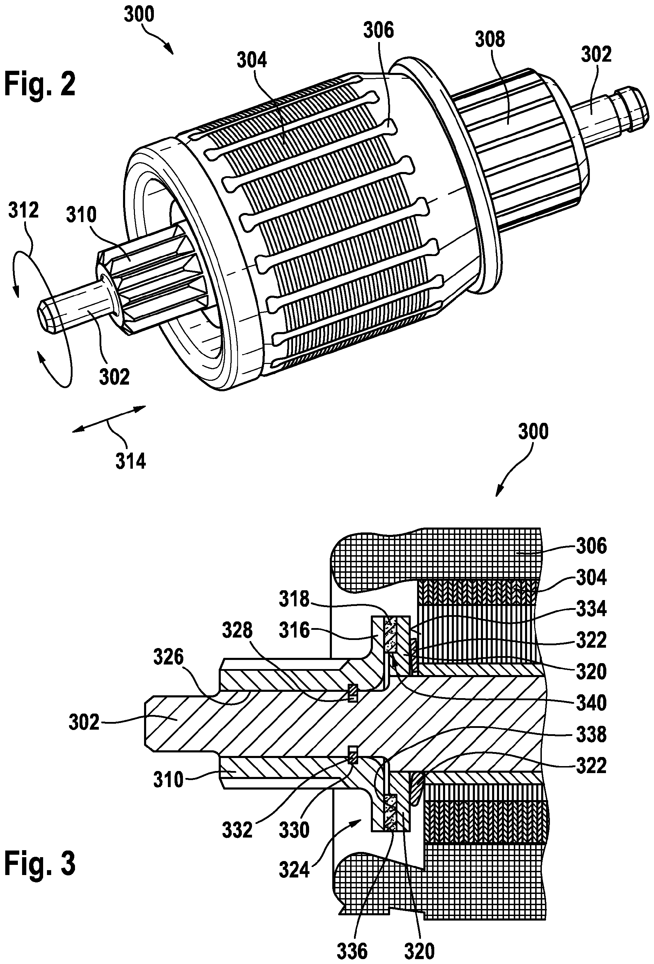

Die Figur 2 zeigt eine vereinfachte perspektivische Ansicht eines erfindungsgemäß ausgestalteten Ankers.

Ein Anker 300 umfasst eine Ankerwelle 302 auf der ein Ankerpaket 304 zur Führung des elektromagnetischen Feldes drehfest angeordnet ist. In das Ankerpaket 304 ist eine Ankerwicklung 306 eingelegt. Die Stromversorgung der Ankerwicklung 306 erfolgt über nicht dargestellte Bürsten und einen Kommutator 308. Anstelle der Ankerwicklung 306 können auch Permanentmagnete zur magnetischen Erregung vorgesehen sein. Auf der Ankerwelle 302 ist das Ankerritzel 310 derart aufgenommen, dass es sich in Richtung des Drehpfeils 312 frei auf der Ankerwelle 302 erst ab Überschreiten eines definierten Drehmomentes drehen kann, es in der Richtung des Pfeils 314, d.h. in axialer Richtung der Ankerwelle 302, nicht auf dieser verschiebbar ist. Das Ankerritzel 310 treibt über ein Zwischengetriebe, insbesondere ein Planetengetriebe (vgl. insb. Figur 1), mit nachgeschaltetem Rollenfreilauf das eigentliche Andrehritzel an. Das Andrehritzel wird während des Startvorgangs mittels eines magnetischen Vorspuraktuators in den Schwungmassenzahnkranz der Brennkraftmaschine eingespurt. Demzufolge ist das Ankerritzel 310 in der Regel mit einer Geradverzahnung versehen, während das Andrehritzel auch eine Schrägverzahnung aufweisen kann, um das Einspuren, insbesondere in einer Zahn-auf-Zahn-Stellung beim Startprozess zu erleichtern.

Die Figur 3 illustriert einen Längsschnitt durch den Anker gemäß Figur 2.

Der Anker 300 umfasst unter anderem das auf der Ankerwelle 302 befestigte Ankerpaket 304 mit der darin eingelegten Ankerwicklung 306. Ein Ankerritzelflansch 316 des Ankerritzels 310 bildet zusammen mit einem Reibbelag 318, einer Scheibe 320 sowie einer Druckfeder 322 eine Rutschkupplung 324. Das Ankerritzel 310 weist zur Befestigung auf der Ankerwelle 302 eine Ankerritzelbohrung 326 auf. In die Ankerwelle 302 ist eine Ankerwellennut 328 und in das Ankerritzel 310 ist eine Ankerritzelnut 330 eingebracht, in denen ein Schnappring 332 angeordnet ist. Hierdurch kann sich das Ankerritzel 310 frei ab Überschreiten eines definierten Drehmomentes auf der Ankerwelle 302 drehen, ein axiales Verschieben auf der Ankerwelle 302 ist jedoch nicht möglich.

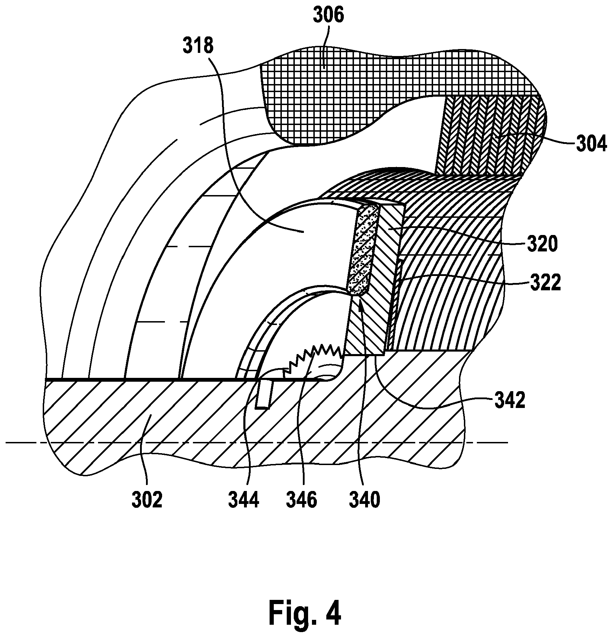

Die Scheibe 320 ist durch eine hier nicht sichtbare Lamellenverzahnung (vgl. Figur 4) verdrehfest auf der Ankerwelle 302 aufgenommen. Die axiale Lagesicherung der Scheibe 320 erfolgt durch den Ankerritzelflansch 316 und das Ankerpaket 304 des Ankers 300 in Verbindung mit der Druckfeder 322. Die Druckfeder 322 stützt sich einerseits auf dem Ankerpaket 304 und andererseits auf einer Scheibeninnenfläche 334 ab. Zur Ermöglichung eines kompakten Aufbaus sollte die Druckfeder 322 über eine möglichst geringe Baulänge in axialer Richtung verfügen. Durch die Druckfeder 322 wird die Rutschkupplung 324 vorgespannt, so dass von Anfang an eine definierte Andruckkraft zwischen der Scheibe 320 und dem Ankerritzelflansch 316 besteht und ein Drehmoment von der Ankerwelle 302 auf das Ankerritzel 310 übertragen werden kann.

Zwischen einer Innenfläche 336 des Ankerritzelflansches 316 und einer Scheibenaußenfläche 338 befindet sich der Reibbelag 318. Der Reibbelag 318 kann grundsätzlich auf der Innenfläche 336 des Ankerritzelflansches 316 und/oder auf der Scheibenaußenfläche 338 jeweils zumindest bereichsweise vorgesehen sein. In der gezeigten bevorzugten Ausführungsform der Erfindung ist der Reibbelag 318 kreisringförmig ausgebildet und in einer kreisförmigen Ausnehmung 340 innerhalb der Scheibenaußenfläche 338 angeordnet. Die Ausnehmung 340 ist zur Erhöhung des übertragbaren Drehmoments in der Peripherie der Scheibe 320 ausgebildet. Der Reibbelag 318 ermöglicht eine Drehmomentübertragung zwischen der Scheibe 320 und dem Ankerritzelflansch 316 infolge einer Kombination aus Reib- und Kraftschluss. Ist die Scheibe 320 beispielsweise mit einem metallischen Material hergestellt, kann der Reibbelag 318 auf der Scheibenaußenfläche 338 zum Beispiel durch Anvulkanisieren eines Elastomers ausgebildet werden. Zur Erhöhung der Reibwirkung und damit des mittels der Rutschkupplung 324 übertragbaren Drehmoments kann das zur Ausbildung des Reibbelags 318 eingesetzte Elastomer beispielsweise mit mineralischen Partikeln versetzt sein.

Übersteigt während des Startvorgangs der Brennkraftmaschine ein zwischen der Ankerwelle 302 und dem Ankerritzel 310 zu übertragendes Drehmoment M einen Maximalwert Mₘₐₓ, so rutscht die Rutschkupplung 324 durch und es erfolgt im Wesentlichen keine weitere Drehmomentübertragung mehr. Sinkt die Drehmomentbelastung der Rutschkupplung 324 unter den konstruktiv festgelegten Mₘₐₓ, so greift die Rutschkupplung 324 wieder und es erfolgt die normale Übertragung des anstehenden Drehmoments. Hierdurch wird eine Beschädigung des Ankers 300 infolge von mechanischen Überbelastungen, wie sie insbesondere bei Unregelmäßigkeiten beim Anlassvorgang einer Brennkraftmaschine auftreten können, zuverlässig vermieden. Das von der Rutschkupplung 324 maximal übertragbare Drehmoment Mₘₐₓ wird vorrangig durch die Härte bzw. die von der Druckfeder 322 entwickelte Federkraft bestimmt. Darüber hinaus kann das maximal übertragbare Drehmoment Mₘₐₓ auch durch die Materialzusammensetzung des Reibbelages 318 sowie die Flächenerstreckung des Reibbelages 318 im Bereich des Ankerritzelflansches 316 und/oder der Scheibe 320 sowie einer Materialstärke des Reibbelages 318 gezielt beeinflusst werden. Der erfindungsgemäße Anker 300 kann ohne wesentliche konstruktive Modifikationen in die bekannte Startervorrichtung 10 (vgl. Figur 1) integriert werden. Anstelle des Sonnenrades 80 greift dann das Ankerritzel 310 des erfindungsgemäßen Ankers 300 in das Umlaufgetriebe 83 (Planetengetriebe) ein.

Die Figur 4 zeigt eine detaillierte Ansicht der Scheibe mit dem Reibbelag.

Der kreisringförmige Reibbelag 318 ist in der gleichfalls kreisringförmigen Ausnehmung 340 der Scheibe 320 angeordnet. Die Ausnehmung 340 ist in einem nicht bezeichneten äußeren Randbereich der Scheibe 320, das heißt im Bereich der radialen Peripherie ausgebildet. Hinter der Scheibe 320 liegt die Druckfeder 322. Die Scheibe 320 verfügt weiterhin über eine Scheibenbohrung 342, die innenseitig mit einer Scheibenverzahnung 344 versehen ist, die zumindest bereichsweise formschlüssig mit einer außenseitigen Lamellenverzahnung 346 der Ankerwelle 302 in Eingriff bringbar ist. Hierdurch ist die Scheibe 320 mit dem Reibbelag 318 verdrehfest auf der Ankerwelle 302 befestigt.

In axialer Richtung wäre eine geringfügige Bewegung der Scheibe 320 auf der Ankerwelle 302 noch möglich, diese wird jedoch nach vorne durch das in axialer Richtung mittels des Schnapprings 332 auf der Ankerwelle 302 festgelegte Ankerritzel 310 und in der entgegengesetzten Richtung nach hinten durch das Ankerpaket 304 im Zusammenspiel mit der Druckfeder 322 begrenzt. Der Schnappring 332 und das Ankerritzel 310 sind hier nicht dargestellt (s. Figur 3).

Aufgrund der Druckfeder 322 ist jedoch noch eine geringfügige federnde Axialbewegung der Scheibe 320 - in der Größenordnung des Federweges der Druckfeder 322 - zwischen dem Ankerritzel 310 und dem Ankerpaket 304 möglich.

## Patentansprüche

1. Anker (300) für einen Elektromotor zum Antrieb einer Startervorrichtung für eine Brennkraftmaschine, mit einem auf einer Ankerwelle (302) drehbar aufgenommenen Ankerritzel (310) zum Antrieb eines nachgeschalteten Zwischengetriebes und einem auf der Ankerwelle angeordneten Ankerpaket (304) mit einer Ankerwicklung (306), wobei das Ankerritzel (310) in axialer Richtung auf der Ankerwelle (302) lagefixiert ist und zwischen dem Ankerritzel (310) und der Ankerwelle (302) eine Rutschkupplung (224) platziert ist, **dadurch gekennzeichnet, dass** das Ankerritzel (310) mittels mindestens eines Schnapprings (332) auf der Ankerwelle (302) befestigt ist.

2. Anker (300) nach Anspruch 1, wobei die Rutschkupplung, (224) einen Ankerritzelflansch (316), mindestens einen Reibbelag (318), eine Scheibe (320) und mindestens eine Druckfeder (322) umfasst.

3. Anker (300) nach einem der Ansprüche 1 oder 2, wobei der Reibbelag (318) zumindest bereichsweise auf einer Innenfläche (336) des Ankerritzelflansches (316) und/oder zumindest bereichsweise auf einer Scheibenaußenfläche (338) ausgebildet ist.

4. Anker (300) nach einem der Ansprüche 1 bis 3, wobei die Scheibe (320) auf einer Lamellenverzahnung (346) der Ankerwelle (302) verdrehfest aufgenommen ist.

5. Anker (300) nach einem der Ansprüche 1 bis 4, wobei zwischen der Scheibe (320) und dem Ankerpaket (304) eine Druckfeder (322) angeordnet ist.

6. Anker (300) nach einem der Ansprüche 1 bis 5, wobei sich die Druckfeder (322) auf einer Scheibeninnenfläche (334) und dem Ankerpaket (304) abstützt.

7. Anker (300) nach einem der Ansprüche 1 bis 6, wobei in die Ankerwelle (302) mindestens eine Ankerwellennut (328) und in einer Ankerritzelbohrung (326) mindestens eine Ankerritzelnut (330) zur Aufnahme des mindestens einen Schnapprings (332) eingebracht ist.

8. Anker (300) nach einem der Ansprüche 1 bis 7, wobei ein durch die Rutschkupplung (324) übertragbares Maximaldrehmoment Mₘₐₓ insbesondere mittels der Druckfeder (322) einstellbar ist.

9. Startervorrichtung mit einem Anker (300) nach einem der vorstehenden Ansprüche.

## Claims

1. Armature (300) for an electric motor for driving a starter device for an internal combustion engine, having an armature pinion (310) which is rotatably accommodated on an armature shaft (302) for driving a downstream intermediate gear, and having an armature pack (304) which is arranged on the armature shaft and has an armature winding (306), wherein the armature pinion (310) is fixed in position on the armature shaft (302) in the axial direction and a slipping clutch (224) is placed between the armature pinion (310) and the armature shaft (302), **characterized in that** the armature pinion (310) is fastened on the armature shaft (302) by means of at least one snap ring (332).

2. Armature (300) according to claim 1, wherein the slipping clutch (224) comprises an armature pinion flange (316), at least one friction lining (318), a disc (320) and at least one compression spring (322).

3. Armature (300) according to any of claims 1 or 2, wherein the friction lining (318) is formed at least portionally on an inner surface (336) of the armature pinion flange (316) and/or at least portionally on an outer disc surface (338).

4. Armature (300) according to any of claims 1 to 3, wherein the disc (320) is accomodated on a lamellar toothing (346) of the armature shaft (302) in a non-rotatable manner.

5. Armature (300) according to any of claims 1 to 4, wherein a compression spring (322) is arranged between the disc (320) and the armature pack (304).

6. Armature (300) according to any of claims 1 to 5, wherein the compression spring (322) is supported on a disc inner surface (334) and the armature pack (304).

7. Armature (300) according to any of claims 1 to 6, wherein at least one armature shaft groove (328) is provided in the armature shaft (302) and at least one armature pinion groove (330) for receiving the at least one snap ring (332) is provided in an armature pinion bore (326).

8. Armature (300) according to any of claims 1 to 7, wherein a maximum torque Mₘₐₓ transmittable by the slipping clutch (324) is adjustable particularly by means of the compression spring (322).

9. Starter device with an armature (300) in according to any one of the proceeding claims.

## Revendications

1. Induit (300) pour un moteur électrique destiné à entraîner un dispositif de démarreur pour un moteur à combustion interne, ayant un pignon d'induit (310) reçu sur un arbre d'induit (302) de manière à pouvoir tourner pour entraîner un engrenage intermédiaire intercalé en aval et un noyau feuilleté d'induit (304) agencé sur l'arbre d'induit avec un enroulement d'induit (306), dans lequel le pignon d'induit (310) est fixé en position sur l'arbre d'induit (302) dans une direction axiale et un accouplement à friction (324) est placé entre le pignon d'induit (310) et l'arbre d'induit (302), **caractérisé en ce que** le pignon d'induit (310) est fixé sur l'arbre d'induit (302) au moyen d'au moins un anneau d'encliquetage (332).

2. Induit (300) selon la revendication 1, dans lequel l'accouplement à friction (224) comprend un flasque de pignon d'induit (316), au moins une garniture de friction (318), un disque (320) et au moins un ressort de compression (322).

3. Induit (300) selon l'une des revendications 1 ou 2, dans lequel la garniture de friction (318) est formée, au moins dans certaines zones, sur une surface intérieure (336) du flasque de pignon d'induit (316) et/ou, au moins dans certaines zones, sur une surface extérieure de disque (338).

4. Induit (300) selon l'une des revendications 1 à 3, dans lequel le disque (320) est reçu de manière bloquée en rotation sur une denture de lamelles (346) de l'arbre d'induit (302) .

5. Induit (300) selon l'une des revendications 1 à 4, dans lequel un ressort de compression (322) est agencé entre le disque (320) et le noyau feuilleté d'induit (304).

6. Induit (300) selon l'une des revendications 1 à 5, dans lequel le ressort de compression (322) est supporté par une surface intérieure de disque (334) et le noyau feuilleté d'induit (304).

7. Induit (300) selon l'une des revendications 1 à 6, dans lequel au moins une rainure d'arbre d'induit (328) est réalisée dans l'arbre d'induit (302) et au moins une rainure de pignon d'induit (330) est réalisée dans un alésage de pignon d'induit (326) pour recevoir le au moins un anneau d'encliquetage (332).

8. Induit (300) selon l'une des revendications 1 à 7, dans lequel un couple maximal Mₘₐₓ pouvant être transmis par l'accouplement à friction (324) peut en particulier être réglé au moyen du ressort de compression (322).

9. Dispositif de démarreur ayant un induit (300) selon l'une des revendications précédentes.
